(19) Europäisches Patentamt European Patent Office Office européen des brevets

(11) **EP 4 517 536 A1**

(12) **EUROPEAN PATENT APPLICATION**

(43) Date of publication:
05.03.2025 Bulletin 2025/10

(21) Application number: 23193890.3

(22) Date of filing: 29.08.2023

(51) International Patent Classification (IPC):
$G06F\ 11/36^{(2025.01)}$      $G06N\ 3/084^{(2023.01)}$

(52) Cooperative Patent Classification (CPC):
G06F 11/3684; G06N 3/084

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Siemens Aktiengesellschaft
80333 München (DE)

(72) Inventors:
• N, Madhusudanan
560036 Bengaluru, Karnataka (IN)

• Nayak, Prajwal
560062 Bangalore, Karnataka (IN)
• Antony, Elvis
90429 Nürnberg (DE)
• Chenecharry, Vivek
560083 Bengaluru, Karnataka (IN)
• Singh, Vivek
560087 Bangalore, Karnataka (IN)

(74) Representative: Isarpatent
Patent- und Rechtsanwälte
Barth Hassa Peckmann & Partner mbB
Friedrichstraße 31
80801 München (DE)

(54) **GENERATING OPTIMAL TEST VALUES OF INPUT AND OUTPUT VARIABLES OF PROGRAM FILES**

(57) The present invention provides a method, a computing system, and a computer-program product for generating optimal test values of input and output variables for one or more program files used to operate a Programmable Logic Controller (PLC). In one embodiment, the method comprises receiving a request to generate a plurality of test values of input and output variables of a program file, generating a graphical representation for the plurality of code statements. The graphical representation represents the plurality of code statements in the form of nodes and represents a relation between each pair of the nodes. Further, an identifier to each of the nodes and an updated identifier is obtained for each of the nodes through a first neural network. Further, the obtained updated identifiers representing the input and output variables of the program file are processed through a second neural network to generate optimal test values of the input and output variables.

FIG. 1

EP 4 517 536 A1

## EP 4 517 536 A1

**Description**

The present invention relates to a field of engineering of computer assisted program files, and more particularly relates to methods and computing systems for generating optimal test values of input and output variables of program files used to operate Programmable Logic Controllers (PLCs).

Typically, one or more program files are executed by a PLC for it to operate. Each of the program files have to be tested prior to their execution in the PLCs. Testing of such a program file requires generation of a test case for the program file and the generated test case can be used for validating the program file. Each test case requires test values for input and output variables of the program file. Such test values are generally obtained by a user based on a static analysis done by the user. The user may be a coder or programmer. The static analysis is a monotonous, human intensive, time consuming, error prone and resource consuming. Since the static analysis is a manual process, no metric exist to gauge how good and reliable the test values are, unless they are manually checked. Also, in the program file, code changes may be frequent and require updates in the test values based on the code changes in the program file, which is not a trivial task. For the updates in the test values, another static analysis may be required, which is cumbersome for the user.

For the static analysis, the user typically follows a Whitebox testing methodology or a Blackbox methodology. In the Whitebox testing methodology, the user goes through the complete program and writes tests which cover each path. In the Blackbox methodology, the user based on the domain knowhow determine what kind of input and output values are expected out of the program file and derive test cases accordingly.

In light of the above, there exists a need for efficient methods and computing systems for generating optimal test values of input and output variables for program files that are used to operate PLCs.

Therefore, it is an object of the present invention to provide methods and computing systems for generating optimal test values of input and output variables for program files that are used to operate PLCs.

The object of the present invention is achieved by methods described herein. A program file is an engineering program designed to control operations of one or more devices in a technical installation. Examples of the devices include, but are not limited to, PLCs, computers, motor drivers, control units, microcontrollers, human machine interfaces, edge servers, and industrial control systems. Although the description herein describes the present invention with reference to PLCs, methods described herein can be performed for any device, though not limited to the examples recited above. The technical installation may be an industrial manufacturing plant, an industrial processing plant, or an industrial power plant. In an example, one or more devices function together in the technical installation to achieve one or more objectives of the technical installation. Each of the devices may comprise a processing unit and a memory. The memory is configured to store the engineering program. The processing unit in the device is configured to execute the engineering program to achieve one or more key performance indicators associated with the engineering program. Examples of key performance indicators include, but are not limited to, processing speed, memory requirement, and process efficiency of the engineering program.

In a preferred embodiment of the present invention, the method, executed by a processing unit, comprises receiving by the processing unit a request to generate a plurality of test values of input and output variables of a program file from amongst one or more program files. The program file comprises a corresponding plurality of code statements. The plurality of code statements comprises assignment statements, program element definition statements, and operation statements.

Further, a graphical representation is generated by the processing unit for the plurality of code statements of the program file. The graphical representation represents the plurality of code statements in the form of nodes and represents a relation between each pair of the nodes. The graphical representation is a knowledge graph having information about relationships between the plurality of code statements in the form of the nodes and the relation between each of the nodes. The relation between each of the nodes indicates data flow and control flow between each of the plurality of code statements. The graphical representation represents how variables are used in different expressions of the program file. In an example, the graphical representation, i.e., the knowledge graph for the program file, i.e., the engineering program, is generated by analysis of the plurality of code statements. In an example, the processing unit is configured to analyze the plurality of code statements by application of a natural language processing algorithm on the plurality of code statements of the program file. The graphical representation includes information about relationships between the plurality of code statements and information about data flow and control flow between each of the plurality of code statements. The graphical representation represents the program file in a way which humans generally interpret the program file.

Further, an identifier is assigned to each of the nodes. The identifier is a value assigned to each of the nodes so that a neural network is able to process the assigned value. Based on the assigned identifier of each of the nodes, an updated identifier is obtained for each of the nodes. The updated identifier is obtained through a first neural network. The updated identifier is a value obtained for each of the nodes so that a neural network is able to process the obtained value. The first neural network is a neural network that considers the assigned identifier of each of the nodes and the relation between each of the nodes to obtain the updated identifier. In an example, the first neural network is a relational graph neural network.

The obtained updated identifiers of a set of the nodes are selected for further processing. The selection of the obtained updated identifiers of the set is based on the criterion that the set represents the input and output variables of the program file. Further, a second neural network processes the selected updated identifiers of the set of nodes to generate optimal test values of the input and output variables. The second neural network is a neural network that keeps adjusting the properties of layers of the second neural network and processing the selected updated identifiers repeatedly until the optimal test values of the input and output variables are generated. The optimal test values of the input and output variables can be used in the test cases to test the program file of the PLC so that when the PLC is operated for actual process, such as to control a manufacturing unit, there is no error in the operation of the PLC.

In a preferred embodiment, the graphical representation is parsed to identify a type of each of the nodes and a type of relation between each pair of the nodes. Each of the determined node type is from amongst a set of predefined node types and the type of relation is from amongst a set of predefined relation types. The nodes and the type of relation between each pair of the nodes represent how data flows in the program file. In an example, the nodes in the program file are identified at a block level of the program file, at an expression level of the program file, and at a usage level of the program file.

In a preferred embodiment, the identifier is a unique numerical value assigned to each of the nodes. When the unique numerical value is assigned, nodes of the same type are assigned the same numerical value. In an example, the unique numerical value is an integer. In an example, the unique numerical value is assigned using one of, but is not limited to, a tokenization mechanism, a sequential numbering mechanism, and a random numbering mechanism. For example, if the number of nodes is 4, then the first node may be assigned with a unique numerical value of 1, the second node may be assigned with a unique numerical value of 2, the third node may be assigned with a unique numerical value of 3, and if the fourth node is similar to the first node, the fourth node may be assigned with a value of 1. The unique numerical value is assigned so that any neural network can process the node represented by a numerical value.

In a preferred embodiment, the method comprises performing at least one iteration of the first neural network using the assigned numerical value of each of the nodes and predefined weights of the identified types of relation between the nodes to obtain an updated numerical value for each of the nodes. A predefined weight of a type of relation is a value representing the relation type. In an example, the weight of each of the nodes is between 0 and 1. The updated numerical value is the updated identifier for each of the nodes. In an example, the first neural network is a Relational-Graph Neural Network (R-GNN). In an example, any neural network having an architecture similar to the R-GNN can be used as the first neural network. The iteration of the first neural network means that the assigned numerical value of each of the nodes and the predefined weights of the identified types of relation between the nodes are passed through the first neural network. In an example, the iteration of the first neural network is repeated until the updated numerical values for each of the nodes are obtained. An updated numerical value for a node indicates that said node has information of another node to which said node is associated. In an example, the updated numerical value for each of the nodes is in the form of a first characteristic vector of a size greater than 1.

In a preferred embodiment, the updated numerical value of each of the nodes in the first neural network is obtained based on equation (1) below:

$$h_i^{L+1} = f\left(h_i^L w^L + \sum_{r_k \in R} \sum_{j \in N_i^{r_k}} \frac{1}{C_{i,r_k}} w_{r_k}^L h_j^L\right) \qquad (1)$$

In the equation (1), L is the number of iterations in the first neural network, $h_i^{L+1}$ is the updated numerical value of $i^{th}$ node after the $L^{th}$ iteration of the first neural network, $f$ is an activation function, $h_i^L$ is the assigned numerical value of the $i^{th}$ node before the $L^{th}$ iteration of the first neural network; $w^L$ is the weight of the node in the $L^{th}$ iteration for which a numerical value is getting updated, $r_k$ is the $k^{th}$ relation between the $i^{th}$ node and the $j^{th}$ node, R is the set of all relations that connect the $i^{th}$ node with all the $j$ neighbours, $N_i^{r_k}$ is the set of neighbours that are connected to the $i^{th}$ node to a subset of the $j$ neighbours with the relation $r_k$, $C_{i,r_k}$ is a number of the nodes to which the $i^{th}$ node is related, $w_{r_k}^L$ is the predefined weight of the determined type of relation between the $i^{th}$ node and the $j^{th}$ node before the $L^{th}$ iteration of the first neural network, and $h_j^L$ is the assigned numerical value of the $j^{th}$ node before the $L^{th}$ iteration of the first neural network. In an example, the activation function is one of a sigmoid function, a relu function, a linear function, and a binary function. The updated numerical value of each of the nodes in the first neural network can be used to perform other diagnoses like code reviews and refactorings.

A vector space representation of the nodes after the iteration of the R-GNN is such that each node that is similar to one another appear closer in the vector space. The utilization of the R-GNN is significant because different relations between the nodes are required to be captured and the R-GNN does this efficiently.

In a preferred embodiment, the method comprises generating an output for each of the input and output variables by processing the obtained updated numerical value of the nodes which represent the input and output variables through the second neural network. The output generated for each of the input and output variables may form the optimal set of the input and output test values.

In an example, the second neural network is a multilayered neural network. In an example, the multilayered neural network is one of a deep feed forward neural network, a convolutional neural network, a recurrent neural network, and a fully connected neural network. In an example, the multilayered neural network has 10 layers.

In a preferred embodiment, the output is a second characteristic vector. The second characteristic vector in the second neural network is obtained based on equation (2) below:

$$a(l) = W(l)a(l\text{-}1) + b(l); \text{ and} \qquad (2)$$

$$y = f(a(n)),$$

In the equation (2), $a(l)$ is the $l$th layer, where value of $l$ is from 1 to n and $n$th layer is the last layer of the second neural network. Further, $W(l)$ is the weight of the $l$th layer of the second neural network, $b(l)$ is a unique bias for the $l$th layer of the second neural network, y is the second characteristic vector, and $f$ is an activation function. In an example, the activation function is one of a sigmoid function, a relu function, a linear function, and a binary function.

In a preferred embodiment, at least one of the predefined weights of the identified types of relation between the nodes, number of iterations of the first neural network, and weights associated with each layer of the second neural network are varied using backpropagation until the output for the input and output variables include values that are within respective predefined expected ranges. The values represent the optimal test values of the input and output variables. For the nodes representing the input and output variables and processed through the second neural network, the obtained output may not be within respective predefined expected ranges. In order to make the output reach within respective predefined expected ranges, one or more inputs parameters such as the predefined weights of the identified types of relation between the nodes, the number of iterations of the first neural network, and the weights associated with each layer of the second neural network can be varied. For example, if the values are deviating by a large margin from respective predefined expected ranges, the number of iterations of the first neural network may be increased or decreased depending on whether the values are more than the respective predefined expected ranges or less than the respective predefined expected ranges.

In a preferred embodiment, the predefined weights of the identified types of relation between the nodes, the number of iterations of the first neural network, and the weights associated with each of the layers of the second neural network are varied using backpropagation. Any other technique similar to the backpropagation can be used to vary the predefined weights of the identified types of relation between the nodes, the number of iterations of the first neural network, and the weights associated with each of the layers of the second neural network.

Further, based on the values representing the optimal test values of the input and output variables, a plurality of test cases can be generated for the program file to check how a device, such as PLC, will operate when the program file is executed on the PLC and based on results of the execution, shortcomings of PLC operation can be fixed. In an example, a machine learning algorithm can be used to generate the test cases based on the optimal test values of the input and output variables. In an example, the processing unit may generate a simulation instance for the program file and then executes the program file on the generated simulation instance in an industrial environment.

In a preferred embodiment, optimal test values of input and output variables may be generated for the program file obtained based on interaction of the program file with another program file from amongst the one or more program files used to operate the PLC. The operation of the PLC based on the generated optimal test values of input and output variables is to optimize behaviour of the PLC. In an example, during the operation of the PLC, a first program file may call a second program file, where both the first and the second program files are used to operate the PLC. Such a calling may result in another program file having some nodes of the first and the second program files and relationships between the nodes. The resulting other program file may be used as a base program file to generate optimal test values of input and output variables and thus optimize the behaviour of the PLC.

Due to the optimal test values of the input and output variables, the test cases are generated in a limited number and are accurate. Also, the test cases are generated automatically without manual intervention, because of the optimal test values of the input and output variables. In addition, time and labor required from a program tester is significantly reduced.

The object of the present invention is also achieved by a computing system for generating optimal test values of input and output variables for a program file used to operate a Programmable Logic Controller (PLC). The computing system comprises one or more processing unit(s) and a memory coupled to the processing unit(s). The memory comprises an automation module stored in the form of machine-readable instructions executable by the processing unit. The automation module is configured for performing the method as described above.

The object of the present invention is also achieved by a computer-program product having machine-readable instructions stored therein, that when executed by one or more processing unit(s), cause the one or more processing unit(s) to perform method steps as described above.

Advantageously, the test case generation for the program file used to operate the PLC can be automated due to the generated optimal test values of the input and output variables of the program file and thus obviates the need for continuous user inputs. Also, static diagnosis of the PLC is possible by applying the test cases based on the generated optimal test values of the input and output variables of the program file.

The program file can be converted into the knowledge graph, i.e., the graphical representation. Thus, the need to reconstruct a constraint satisfaction problem is obviated, which would have otherwise required to generate the test cases for the program file. In addition, the cost and time spent on maintenance and generation of the test cases can be reduced. The present invention ensures completeness in safety critical applications.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG. 1 is a block diagram of an industrial environment capable of generating optimal test values of input and output variables for a program file used to operate a Programmable Logic Controller (PLC), according to an embodiment of the present invention;

FIG. 2 is a block diagram of a computing system for generating optimal test values of input and output variables for a program file used to operate a Programmable Logic Controller (PLC), according to an embodiment of the present invention;

FIG. 3 is a block diagram of an automation module, such as those shown in FIG 2, in which an embodiment of the present invention can be implemented; and

FIG. 4 is a process flowchart illustrating an exemplary method of generating optimal test values of input and output variables for a program file used to operate a Programmable Logic Controller (PLC), according to an embodiment of the present invention.

Various embodiments are described with reference to the drawings, wherein like reference numerals are used to refer to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

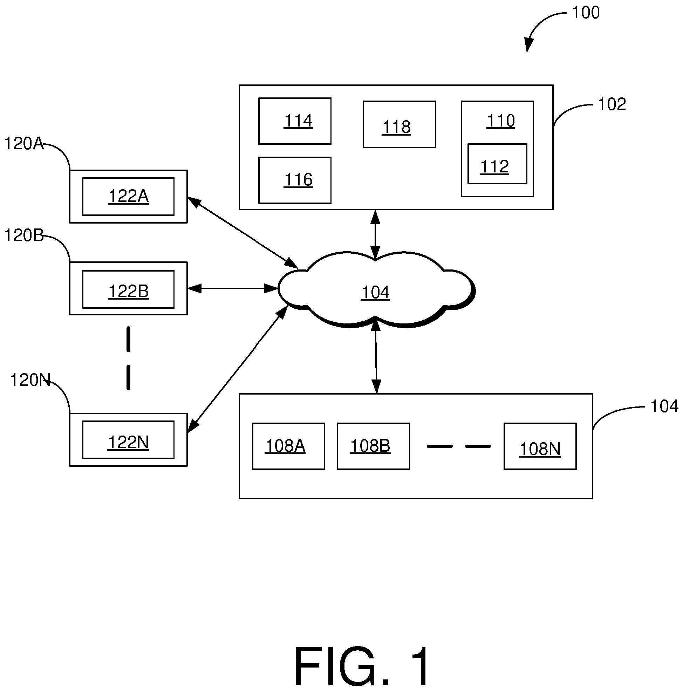

FIG. 1 is a block diagram of an industrial environment 100 capable of capable of generating optimal test values of input and output variables for a program file used to operate a Programmable Logic Controller (PLC), according to an embodiment of the present invention. In FIG. 1, the industrial environment 100 includes a computing system 102, a technical installation 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of configurable computing physical and logical resources. The computing system 102 is communicatively connected to the technical installation 106 via the network 104 (such as Local Area Network (LAN), Wide Area Network (WAN), Wi-Fi, Internet, any short range or wide range communication). The computing system 102 is also connected to the one or more client devices 120A-N via the network 104.

The computing system 102 is connected to one or more engineering objects 108A-N. The one or more engineering objects 108A-N are devices in the technical installation 106 connected to each other via the network 104. The one or more engineering objects 108A-N may include the PLCs. In addition to the PLCs, the one or more engineering objects 108A-N may include, but are not limited to, servers, robots, switches, automation devices, PLCs, human machine interfaces (HMIs), motors, valves, pumps, actuators, sensors and other industrial equipment(s).

The client devices 120A-N may be a desktop computer, laptop computer, tablet, smart phone and the like. Each of the client devices 120A-N is provided with an engineering tool 122AN for generating and/or editing a plurality of engineering projects respectively.

The client devices 120A-N can access the computing system 102 for automatically generating engineering projects. The client devices 120A-N can access cloud applications (such as providing performance visualization of the one or more engineering objects 108A-N via a web browser). Throughout the specification, the terms "client device" and "user device" are used interchangeably.

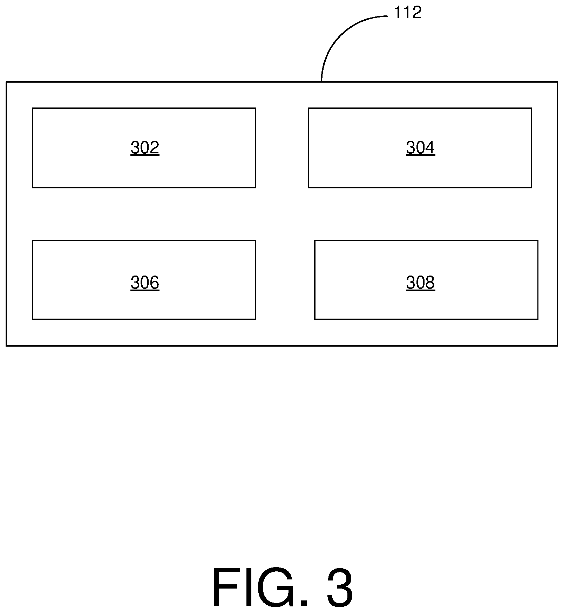

The computing system 102 may be a standalone server or may be a remote server on a cloud computing platform. In a preferred embodiment, the computing system 102 may be a cloud-based computing system. The computing system 102 is capable of delivering applications (such as cloud applications) for managing a technical installation 106 comprising the one or more engineering objects 108A-N. The computing system 102 may comprise a platform 110 (such as a cloud computing platform), an automation module 112, a server 114 including hardware resources and an operating system (OS), a first network interface 116 and a database 118. The first network interface 116 enables communication between the computing system 102, the technical installation 106, and the client device(s) 120A-N. The interface (such as cloud interface) (not shown in FIG 1) may allow the engineers at the one or more client device (s) 120A-N to access engineering project files stored at the computing system 102 and perform one or more actions on the engineering project files as same instance. The server 114 may include one or more servers on which the OS is installed. The servers 114 may comprise one or more processing units, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. In an exemplary embodiment, the platform 110 may correspond to an Integrated Development Environment (IDE) comprising program editors and compilers which allow the users of the client devices 120A-N to generate engineering programs. The platform 110 may further comprise an automation module 112 configured for generating engineering programs. Details of the automation module 112 is explained in FIG 3.

The database 118 stores the information relating to the technical installation 106 and the client device(s) 120A-N. The database 118 is, for example, a structured query language (SQL) data store or a not only SQL (NoSQL) data store. In an example, the database 118 may be a graph database. In an exemplary embodiment, the database 118 may be configured as cloud-based database implemented in the industrial environment 100 where computing resources are delivered as a service over the platform 110. In another embodiment, the database 118 is a location on a file system directly accessible by the automation module 112. The database 118 is configured to store engineering project files, program files, object behavior model, parameter values associated with the one or more engineering objects 108A-N, test results, simulation results, status messages, one or more simulation instances, graphical programs, program logics, program logic patterns, engineering objects 108A-N and engineering object properties, one or more engineering object blocks, relationship information between the engineering objects, requirements, program update messages and the like.

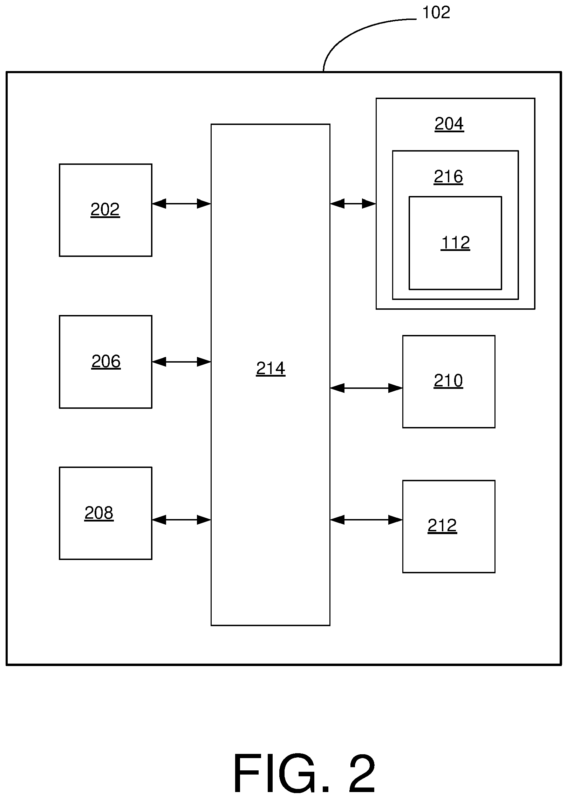

FIG 2 is a block diagram of the computing system 102 for generating optimal test values of input and output variables for a program file used to operate a Programmable Logic Controller (PLC), according to an embodiment of the present invention. In FIG 2, the computing system 102 includes a processing unit 202, an accessible memory 204, a storage unit 206, a communication interface 208, an input-output unit 210, a second network interface 212 and a bus 214.

The processing unit 202, as used herein, means any type of computational circuit, such as, but not limited to, a microprocessing unit, microcontroller, complex instruction set computing microprocessing unit, reduced instruction set computing microprocessing unit, very long instruction word microprocessing unit, explicitly parallel instruction computing microprocessing unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processing unit 202.

When executed by the processing unit 202, the automation module 112 causes the processing unit 202 to generate optimal test values of input and output variables for a program file. In one example, using the optimal test values of input and output variables, test cases generated for the program file are optimized by eradicating those test cases which would have required in case of static analysis by a programmer.

The automation module 112 is configured to execute one or more programs stored in the servers 114 to cause the processing unit 202 to receive a request to generate a plurality of test values of input and output variables of a program file. The program file comprises a plurality of code statements. The plurality of code statements comprises assignment statements, program element definition statements, and operation statements. The program file is designed to control operation of a plurality of devices in a technical installation. Examples of the plurality of devices include but is not limited to, programmable logic controllers, computers, motor drivers, control units, microcontrollers, human machine interfaces, edge servers, and industrial control systems. The technical installation 106 is at least one of an industrial manufacturing plant, an industrial processing plant, or an industrial power plant. The plurality of devices function together in the technical installation 106 to achieve one or more objectives of the technical installation 106.

The automation module 112 causes the processing unit 202 to generate a graphical representation for the plurality of code statements. The graphical representation represents the plurality of code statements in the form of nodes and represents a relation between each pair of the nodes. The graphical representation is a knowledge graph having information about relationships between the plurality of code statements in the form of the nodes and the relation between each of the nodes. The relation between each of the nodes indicates data flow and control flow between each of the plurality of code statements. In an example, the knowledge graph may be created using an ontology schema.

The automation module 112 causes the processing unit 202 to parse the graphical representation to identify a type of each of the nodes and a type of relation between each pair of the nodes. Each of the determined node type is from amongst a set of predefined node types stored in the accessible memory 204 and the type of relation is from amongst a set of predefined relation types stored in the accessible memory 204. The nodes and the type of relation between each pair of the nodes represent how data flows in the program file.

The automation module 112 causes the processing unit 202 to assign an identifier to each of the nodes. To assign the identifier to each of the nodes, the automation module 112 causes the processing unit 202 to assign a unique numerical value to each of the nodes. While assigning the unique numerical value, nodes of the same type are assigned the same numerical value. In an example, the unique numerical value is an integer. The identifier in the form of the numerical value is assigned to the nodes so that the node can be a representation that can be identified by any neural network. In an example, the unique numerical value is assigned using one of, but is not limited to, a tokenization mechanism, a sequential numbering mechanism, and a random numbering mechanism. For example, if the number of nodes is 4, then using the random numbering mechanism, the first node may be assigned with a unique numerical value of 5, the second node may be assigned with a unique numerical value of 7, the third node may be assigned with a unique numerical value of 9, and if the fourth node is similar to the first node, the fourth node may be assigned with a value of 5.

The automation module 112 causes the processing unit 202 to obtain an updated identifier for each of the nodes through a first neural network. In an example, the first neural network is a relational graph neural network. The automation module 112 causes the processing unit 202 to perform at least one iteration of the first neural network using the assigned numerical value of each of the nodes and predefined weights of the identified types of relation between the nodes to obtain an updated numerical value for each of the nodes. The updated numerical value for each of the nodes is the updated identifier for each of the nodes. A predefined weight of a type of relation is a value representing the relation type. In an example, the iteration of the first neural network is repeated until the updated numerical values for each of the nodes are obtained such that the updated numerical value for a node indicates that said node has information of another node to which said node is associated. In an example, the updated numerical value is a first characteristic vector of a size greater than 1.

During the iteration of the first neural network using the assigned numerical value of each of the nodes and the predefined weights of the identified types of relation between the nodes, the updated numerical value of each of the nodes in the first neural network is obtained based on equation (1) below:

$$h_i^{L+1} = f\left(h_i^L w^L + \sum_{r_k \in R} \sum_{j \in N_i^{r_k}} \frac{1}{c_{i,r_k}} w_{r_k}^L h_j^L\right) \tag{1}$$

In the equation (1), L is the number of iterations in the first neural network, $h_i^{L+1}$ is the updated numerical value of $i^{th}$ node after the $L^{th}$ iteration of the first neural network, $f$ is an activation function, $h_i^L$ is the assigned numerical value of the $i^{th}$ node before the $L^{th}$ iteration of the first neural network; $w^L$ is the weight of the node in the $L^{th}$ iteration for which a numerical value is getting updated, $r_k$ is the $k^{th}$ relation between the $i^{th}$ node and the $j^{th}$ node, $R$ is the set of all relations that connect the $i^{th}$ node with all the $j$ neighbours, $N_i^{r_k}$ is the set of neighbours that are connected to the $i^{th}$ node to a subset of the $j$ neighbours with the relation $r_k$, $C_{i,r_k}$ is a number of the nodes to which the $i^{th}$ node is related, $w_{r_k}^L$ is the predefined weight of the determined type of relation between the $i^{th}$ node and the $j^{th}$ node before the $L^{th}$ iteration of the first neural network, and $h_j^L$ is the assigned numerical value of the $j^{th}$ node before the $L^{th}$ iteration of the first neural network. In an example, the activation function is one of a sigmoid function, a relu function, a linear function, and a binary function.

Although the updated numerical value of each of the nodes in the first neural network is obtained based on equation (1), any equation, which can use the assigned numerical value of each of the nodes and the predefined weights of the identified types of relation between the nodes to obtain the updated numerical value for each of the nodes, can be used.

The automation module 112 causes the processing unit 202 to select the obtained updated identifiers of a set of the nodes for further processing. The set of the nodes represents the input and output variables of the program file. Further, the automation module 112 causes the processing unit 202 to process the selected updated identifiers of the set of nodes through a second neural network to generate optimal test values of the input and output variables. To generate optimal test values of the input and output variables, the automation module 112 causes the processing unit 202 to generate an output for each of the input and output variables by processing the obtained updated numerical value of the nodes which represent the input and output variables through the second neural network. The output generated for each of the input and output variables may form the optimal set of the input and output test values. In an example, the second neural network is a multilayered neural network. In an example, the multilayered neural network is one of a deep feed forward neural network, a convolutional neural network, a recurrent neural network, and a fully connected neural network.

The output of the second neural network is obtained based on equation (2). In an example, the output is a second characteristic vector obtained based on:

$$a(l) = W(l)a(l\text{-}1) + b(l); \; and \qquad (2)$$

$$y = f(a(n)),$$

In the equation (2), $a(l)$ is the $lth$ layer, where value of $l$ is from 1 to n and $nth$ layer is the last layer of the second neural network. Further, $W(l)$ is the weight of the $l^{th}$ layer of the second neural network, $b(l)$ is a unique bias for the $l^{th}$ layer of the second neural network, y is the second characteristic vector, and $f$ is an activation function. In an example, the activation function is one of a sigmoid function, a relu function, a linear function, and a binary function.

Although the second characteristic vector is obtained based on equation (1), any equation, which can use the obtained updated identifiers of the set of the nodes representing the input and output variables of the program file and the weights associated with each layer of the second neural network, can be used.

The automation module 112 causes the processing unit 202 to vary at least one of the predefined weights of the identified types of relation between the nodes, number of iterations of the first neural network, and the weights associated with each of the layers of the second neural network until the output for the input and output variables include values that are within respective predefined expected ranges. The values represent the optimal test values of the input and output variables. For the nodes representing the input and output variables and processed through the second neural network, the automation module 112 causes the processing unit 202 to compare the values with the respective predefined expected ranges and if the obtained values are not within the respective predefined expected ranges, one or more inputs parameters such as the predefined weights of the identified types of relation between the nodes, the number of iterations of the first neural network, and the weights associated with each layer of the second neural network can be varied. For example, the number of iterations of the first neural network may be increased or decreased to ensure that the obtained values with the respective predefined expected ranges.

In an example, the automation module 112 causes the processing unit 202 to use backpropagation to vary the predefined weights of the identified types of relation between the nodes, the number of iterations of the first neural network, and the weights associated with each of the layers of the second neural network. Any other technique similar to the backpropagation can be used to vary the predefined weights of the identified types of relation between the nodes, the number of iterations of the first neural network, and the weights associated with each of the layers of the second neural network.

The automation module 112 causes the processing unit 202 to generate test cases for the program file based on the optimal test values of the input and output variables.

The storage unit 206 may be a non-transitory storage medium configured for storing a database (e.g., database 118) which comprises server version of the plurality of programming blocks associated with the set of industrial domains.

The communication interface 208 is configured for establishing communication sessions between the one or more client devices 120A-N and the computing system 102. The communication interface 208 allows the one or more engineering applications running on the client devices 120A-N to import/export engineering project files into the computing system 102. In an embodiment, the communication interface 208 interacts with the interface at the one or more client devices 120A-N for allowing the engineers to access the engineering programs associated with an engineering project file and perform one or more actions on the engineering programs stored in the computing system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface and also displays the status information associated with each set of actions performed on the graphical user interface. The set of actions may include execution of predefined tests, download, compile and deployment of program files. The bus 214 acts as interconnect between the processing unit 202, the memory 204, and the input-output unit 210. The second network interface 212 may be configured to handle network connectivity, bandwidth and network traffic between the computing system 102, client devices 120A-N and the technical installation 106.

Those of ordinary skilled in the art will appreciate that the hardware depicted in FIG. 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a computing system 102 as is unique to the present disclosure or necessary for an understanding of the present disclosure is depicted and described. The remainder of the construction and operation of the computing system 102 may conform to any of the various current implementation and practices known in the art.

FIG. 3 is a block diagram of the automation module 112, such as those shown in FIG. 1, according to an embodiment of the present invention. In FIG. 3, the automation module 112 comprises a request handling module 302, a graphical representation generation module 304, an identifier assigning module 306, and a test value generation module 308. FIG. 3 is explained in conjunction with FIG. 1 and FIG. 2.

The request handling module 302 is configured for receiving the request to generate the plurality of test values of input and output variables of the program file having a plurality of code statements. For example, the request is received from one of the one or more users external to the industrial environment 100 via a network. In an alternative embodiment, the request is received from the one of the one or more client devices 120A-N via the network 104.

The graphical representation generation module 304 is configured for a graphical representation for the plurality of code statements. The graphical representation represents the plurality of code statements in the form of nodes and represents a relation between each pair of the nodes. The graphical representation is a knowledge graph having information about relationships between the plurality of code statements in the form of the nodes and the relation between each of the nodes. In a preferred embodiment, the generated graphical representation contains information about relationships between the set of variables corresponding to each code statement of the plurality of code statements of the program file. The set of variables comprises a plurality of data and pointer variables defined and used in the plurality of code statements.

The identifier assigning module 306 is configured for assigning the identifier to each of the nodes. The identifier assigning module 306 assigns the identifier by designating the unique numerical value to each of the nodes with a condition that the nodes of the same type are assigned the same numerical value. The identifier assigning module 306 does not follow any specific requirement to assign the identifier. Instead, the identifier assigning module 306 uses one of, but is not limited to, the tokenization mechanism, the sequential numbering mechanism, and the random numbering mechanism for assigning the identifier to each of the nodes.

The test value generation module 308 is configured for obtaining the updated identifier for each of the nodes through the first neural network and further selecting the obtained updated identifiers of the set of the nodes for further processing. The selection of the set is based on the determination that the set of the nodes represents the input and output variables of the program file. The test value generation module 308 is further configured for processing the selected updated identifiers of the set of nodes through the second neural network to generate the optimal test values of the input and output variables.

In an example, the automation module 112 may include an engineering project database (not shown) configured for storing an engineering project library comprising the program file. The engineering project database is configured to store information about the one or more engineering objects 108A-N such as physical connections between the one or more engineering objects 108A-N, and a plurality of parameter values associated with the one or more engineering objects 108A-N and the physical connections. The engineering project database is configured for continuously updating the engineering project library with updated versions of the engineering projects. Also, the engineering project database is configured for maintaining the engineering project library.

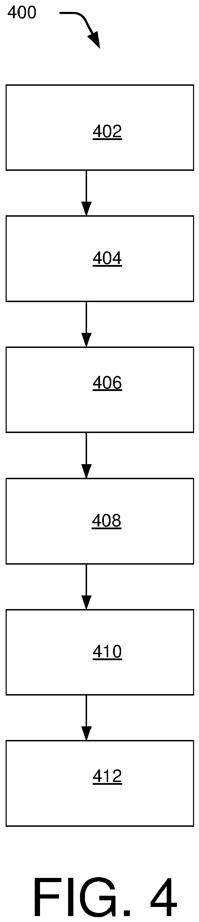

FIG. 4 is a process flowchart illustrating an exemplary method 400 of generating optimal test values of input and output variables for a program file used to operate a Programmable Logic Controller (PLC), according to an embodiment of the present invention.

At step 402, a request to generate a plurality of test values of input and output variables of a program file is received by the processing unit 202. The program file includes a plurality of code statements. The plurality of code statements comprises assignment statements, program element definition statements, and operation statements. The program file is designed to control operation of a plurality of devices in a technical installation, particularly programmable logic controllers. The technical installation is at least one of an industrial manufacturing plant, an industrial processing plant, or an industrial power plant. The plurality of devices functions together in the technical installation to achieve one or more objectives of the technical installation.

At step 404, a graphical representation for the plurality of code statements is generated. The graphical representation represents the plurality of code statements in the form of nodes and represents a relation between each pair of the nodes. Each of the nodes is associated with a specific code statement of the plurality of code statements. The graphical representation is a knowledge graph generated by the processing unit 202 for the program file based on analysis of the plurality of code statements. The processing unit 202 may be configured to analyze the plurality of code statements by application of a natural language processing algorithm on the plurality of code statements of the program file. The knowledge graph comprises information about relationships between the determined plurality of code statements. The knowledge graph further comprises information about data flow and control flow between each of the plurality of code statements.

Advantageously, the generated knowledge graph is used for representing the plurality of code statements and for evaluation of a plurality of control flow paths in the program file. The plurality of control flow paths is predetermined as soon as the knowledge graph is available. Advantageously, the plurality of control flow paths is determined before a plurality of test case values are ready.

In a case example (now shown), consider that that a program file has 2 input variables (x, y) and three temporary variables (m, n, o) used in 3 "IF" conditional statements. To generate a graphical representation or a knowledge graph for this program file, each code statement of the program file is marked as a node. Further, data flow connections between the nodes are marked to represent how the data flows from one node of the program file to another node of the program file. Further, the type of each variable used in the program file is represented for information regarding the different types of the variables and which variable maps to which type. Further, an abstract syntax tree (AST) of the program file is created and further information regarding where the variables are first created is represented. In the program file, the variables are created at the beginning and in a unique way of representation of the knowledge graph, each variable represented with a single node and each AST which uses the variable is connected to represent that the variable is used inside the AST. This is important for the user in the case of test case generation as it gives us information regarding the variable statements in which the variable is being used. Such a graphical representation now can be fed into artificial intelligence models to generate optimal test values for input and output variables as explained below in subsequent method steps.

At step 406, an identifier is assigned to each of the nodes as a unique numerical value, for example, an integer. Although, nodes of the same type are assigned a same numerical value. In an example, the unique numerical value is an integer and can be assigned using one of a tokenization mechanism, a sequential numbering mechanism, and a random numbering mechanism. An identifier of a node is an indicative of information available at the node.

At step 408, an updated identifier is obtained for each of the nodes through a first neural network, for example, a relational graph neural network. The updated identifier is in the form of a first characteristic vector of a size greater than 1. The processing unit 202 performs one or more iterations of the first neural network using the assigned numerical value of each of the nodes and predefined weights of the identified types of relation between the nodes to obtain an updated numerical value for each of the nodes. The updated numerical value for each of the nodes is the updated identifier for each of the nodes. An updated identifier of a node is an indicative that the information available at the node contains information of one or more nodes to which said node is associated. In an example, the updated numerical value of each of the nodes in the first neural network is obtained based on equation (1), which is described above in the description of FIG. 2.

At step 410, the obtained updated identifiers of a set of the nodes are selected. The set represents the input and output variables of the program file.

At step 412, the selected updated identifiers of the set of nodes are processed through a second neural network to generate optimal test values of the input and output variables. For generating the optimal test values of the input and output variables, an output for each of the input and output variables is generated by processing the obtained updated numerical value of the nodes which represent the input and output variables through the second neural network, for example, a multilayered neural network. In an example, the output of the second neural network is obtained based on equation (2), which is described above in the description of FIG. 2. Further,

The least one of the predefined weights of the identified types of relation between the nodes, the number of iterations of the first neural network, and the weights associated with each of the layers of the second neural network are varied, for example, using backpropagation, until the output for the input and output variables include values that are within respective predefined expected ranges. The values represent the optimal test values of the input and output variables.

In an example, the first and second neural networks may be trained on actual values that the input and output variables can take based on domain it will learn to use the right range of values in the test case. For example, if the variable has the name room_temperature then the neural network will learn that the domain values can be between 20 degree to 30 degree Celsius based on the training samples.

The present invention can take a form of a computer program product comprising program modules accessible from computer-usable or computer-readable medium storing program code for use by or in connection with one or more computers, processing units, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

**List of References**

1.   Industrial environment 100
2.   Computing system 102
3.   Network 104
4.   Technical installation 106
5.   Engineering objects 108A-N
6.   Platform 110
7.   Automation module 112
8.   Server 114
9.   Network interface 116
10.   Database 118
11.   Client devices 120A-N
12.   Engineering tool 122AN
13.   Processing unit 202
14.   Accessible memory 204
15.   Storage unit 206
16.   Communication interface 208
17.   Input-output unit 210
18.   Network interface 212
19.   Bus 214
20.   Integrated development environment 216.
21.   Request handling module 302
22.   Graphical representation generation module 304
23.   Identifier assigning module 306
24.   Test value generation module 308

**Claims**

1.   A method for generating optimal test values of input and output variables for one or more program files used to operate a Programmable Logic Controller (PLC), the method, executed by a processing unit (202), comprising:

receiving a request to generate a plurality of test values of input and output variables of a program file, from amongst one or more program files, wherein each of the one or more program files comprises a corresponding plurality of code statements;
generating, for the program file, a graphical representation for the plurality of code statements, wherein the graphical representation represents the plurality of code statements in the form of nodes and represents a relation between each pair of the nodes;
assigning an identifier to each of the nodes;
obtaining an updated identifier for each of the nodes through a first neural network;
selecting the obtained updated identifiers of a set of the nodes, wherein the set represents the input and output variables of the program file; and

processing the selected updated identifiers of the set of nodes through a second neural network to generate optimal test values of the input and output variables.

2. The method as claimed in claim 1, wherein the method comprises parsing the graphical representation to identify a type of each of the nodes and a type of relation between each pair of the nodes, wherein each of the determined node type is from amongst a set of predefined node types and the type of relation is from amongst a set of predefined relation types.

3. The method as claimed in one of claims 1 and 2, wherein the identifier is a unique numerical value assigned to each of the nodes, wherein nodes of the same type are assigned a same numerical value.

4. The method as claimed in claim 3, wherein the method comprises performing at least one iteration of the first neural network using the assigned numerical value of each of the nodes and predefined weights of the identified types of relation between the nodes to obtain an updated numerical value for each of the nodes, wherein the updated numerical value is the updated identifier for each of the nodes.

5. The method as claimed in claim 4, wherein the method comprises generating an output for each of the input and output variables by processing the obtained updated numerical value of the nodes which represent the input and output variables through the second neural network.

6. The method as claimed in claim 5, wherein the output is a second characteristic vector.

7. The method as claimed in claim 5, wherein at least one of the predefined weights of the identified types of relation between the nodes, number of iterations of the first neural network, and weights associated with each layer of the second neural network are varied until the output for the input and output variables include values that are within respective predefined expected ranges, wherein the values represent the optimal test values of the input and output variables.

8. The method as claimed in claim 7, wherein the predefined weights of the identified types of relation between the nodes, the number of iterations of the first neural network, and the weights associated with each of the layers of the second neural network are varied using backpropagation.

9. The method as claimed in claim 4, wherein the updated numerical value of each of the nodes in the first neural network is obtained based on:

$$h_i^{L+1} = f(h_i^L w^L + \sum_{r_k \in R} \sum_{j \in N_i^{r_k}} \frac{1}{C_{i,r_k}} w_{r_k}^L h_j^L)$$

wherein:

L is the number of iterations in the first neural network;

$h_i^{L+1}$ is the updated numerical value of $i^{th}$ node after the $L^{th}$ iteration of the first neural network;

$f$ is an activation function;

$h_i^L$ is the assigned numerical value of the $i^{th}$ node before the $L^{th}$ iteration of the first neural network;

$w^L$ is is the weight of the node in the $L^{th}$ iteration for which a numerical value is getting updated;

$r_k$ is the $k^{th}$ relation between the $i^{th}$ node and the $j^{th}$ node;

$R$ is the set of all relations that connect the $i^{th}$ node with all the $j$ neighbours;

$N_i^{r_k}$ is the set of neighbours that are connected to the $i^{th}$ node to a subset of the $j$ neighbours with the relation $r_k$;

$C_{i,r_k}$ is a number of the nodes to which the $i^{th}$ node is related;

$w_{r_k}^L$ is the predefined weight of the determined type of relation between the $i^{th}$ node and the $j^{th}$ node before the $L^{th}$ iteration of the first neural network; and

$h_j^L$ is the assigned numerical value of the $j^{th}$ node before the $L^{th}$ iteration of the first neural network.

10. The method as claimed in claim 6, wherein the second characteristic vector in the second neural network is obtained based on:

$$a(l) = W(l)a(l\text{-}1) + b(l);$$

*and*

$$y = f(a(n)),$$

wherein:

    *a(l)* is the *lth* layer, wherein value of *l* is from 1 to n, wherein *nth* layer is the last layer of the second neural network;
    *W(l)* is the weight of the *l*<sup>th</sup> layer of the second neural network;
    *b(l)* is a unique bias for the *l*<sup>th</sup> layer of the second neural network;
    y is the second characteristic vector; and
    *f* is an activation function.

11. The method as claimed in claim 1, wherein the first neural network is a Relational-Graph Neural Network (R-GNN).

12. The method as claimed in claim 1, wherein the second neural network is a multilayered neural network.

13. The method as claimed in claim 1, wherein the method comprises generating optimal test values of input and output variables for the program file obtained based on interaction of the program file with another program file from amongst the one or more program files used to operate the PLC, wherein the operation of the PLC based on the generated optimal test values of input and output variables is to optimize behaviour of the PLC.

14. A computing system (102) having a processing unit (202) to execute a method as claimed in one of claims 1 to 13.

15. A computer-program product, having machine readable instructions stored therein, that when executed by a processing unit (202), cause the processing unit (202) to perform a method as claimed one of claims 1 to 13.

## FIG. 1

FIG. 2

112

302

304

306

308

# FIG. 3

400

402

404

406

408

410

412

# FIG. 4

Europäisches
Patentamt

European
Patent Office

Office européen
des brevets

# EUROPEAN SEARCH REPORT

**Application Number**

**EP 23 19 3890**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 148 584 A1 (SIEMENS AG [DE]) 15 March 2023 (2023-03-15) | 1,14,15 | **INV.**<br>G06F11/36 |
| A | * the whole document *<br>* abstract *<br>* paragraph [0019] *<br>* paragraph [0026] - paragraph [0027] *<br>* paragraph [0065] *<br>* paragraph [0038] *<br>* paragraph [0041] *<br>* paragraph [0043] * | 2-13 | G06N3/084 |
| A | US 11 055 639 B1 (CAY PELIN [US] ET AL) 6 July 2021 (2021-07-06)<br>* the whole document *<br>* abstract * | 1-15 | |
| A | US 11 561 690 B2 (JMP STATISTICAL DISCOVERY LLC [US]) 24 January 2023 (2023-01-24)<br>* the whole document * | 1-15 | |

**TECHNICAL FIELDS SEARCHED (IPC)**

G06F
G06N

The present search report has been drawn up for all claims

| Place of search | Date of completion of the search | Examiner |
|---|---|---|
| Munich | 26 February 2024 | Iannuzzi, Silvia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 23 19 3890**

This annex lists the patent family members relating to the patent documents cited in the above-mentioned European search report.
The members are as contained in the European Patent Office EDP file on
The European Patent Office is in no way liable for these particulars which are merely given for the purpose of information.

**26-02-2024**

| Patent document cited in search report | | Publication date | Patent family member(s) | | Publication date |
|---|---|---|---|---|---|
| EP 4148584 | A1 | 15-03-2023 | EP WO | 4148584 A1 2023041509 A1 | 15-03-2023 23-03-2023 |
| US 11055639 | B1 | 06-07-2021 | NONE | | |
| US 11561690 | B2 | 24-01-2023 | NONE | | |

For more details about this annex : see Official Journal of the European Patent Office, No. 12/82